## Europäisches Patentamt

## European Patent Office

## Office européen des brevets

(19)

(11) Publication number: **0 203 592**
A2

# EUROPEAN PATENT APPLICATION

(21) Application number: **86107265.0**

(22) Date of filing: **28.05.86**

(51) Int. Cl.⁴: **G 11 B 27/30,** G 11 B 5/016, G 11 B 20/12 // H04N5/781

(30) Priority: **28.05.85 JP 114692/85**

(43) Date of publication of application: **03.12.86 Bulletin 86/49**

(84) Designated Contracting States: **AT CH DE FR GB IT LI NL SE**

(71) Applicant: **SONY CORPORATION, 7-35 Kitashinagawa 6-Chome Shinagawa-ku, Tokyo 141 (JP)**

(72) Inventor: **Kutaragi, Ken c/o Sony Corporation, 7-35 Kitashinagawa 6-chome, Shinagawa-ku Tokyo (JP)**

(74) Representative: **Patentanwälte TER MEER - MÜLLER - STEINMEISTER, Mauerkircherstrasse 45, D-8000 München 80 (DE)**

(54) Synchronizing signal detecting apparatus.

(57) A synchronizing signal detecting circuit for a digital data reproducing apparatus having a reproducing device (12) connected to a magnetic head (11) for deriving digital signals, a phase locked loop circuit (16) connected to the reproducing device for generating a clock signal based on the derived digital signals, a sync. (synchronizing) counter (17) for generating sync. timings by counting the clock signal, a plurality of sync. pattern detecting circuits (13, 14) connected to the reproducing device (12) for detecting sync. patterns included in the digital signals, and a logic circuit (15) connected to the plurality of sync. pattern detecting circuits (13, 14) for supplying an initialize pulse to the sync. counter (17) upon detecting successive sync. patterns in the digital signals at the plurality of sync. pattern detecting circuits.

SYNCHRONIZING SIGNAL DETECTING APPARATUS

2

This invention relates generally to synchronizing signal detecting circuits and more particularly to a synchronizing signal detecting circuit for digital data reproduced from a magnetic disc.

As a small-sized floppy disc, there has been proposed a 2-inch sized floppy disc that is developed as a floppy disc for use with an electronic still camera.

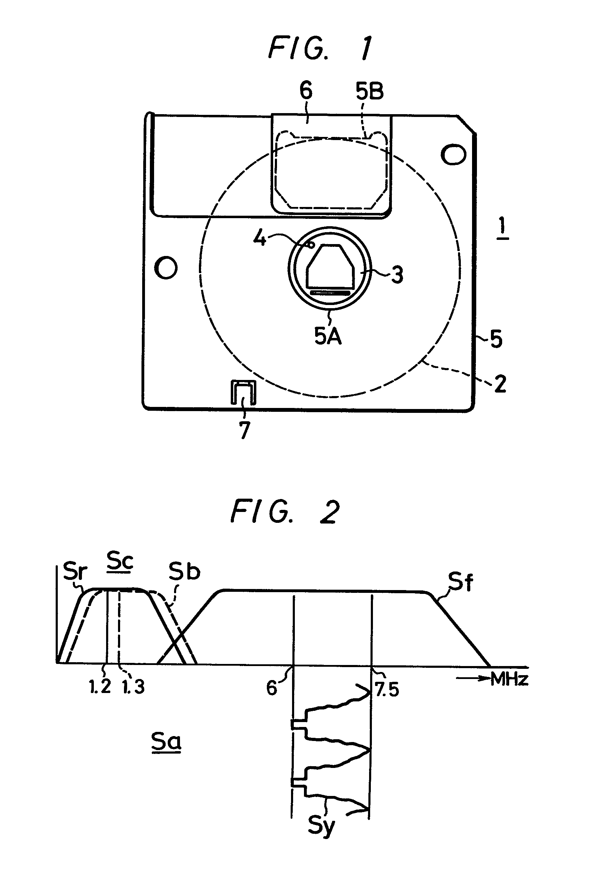

A video floppy disc that is standardized nowadays is constructed as shown in Fig. 1. Fig. 1 is a top view of such standardized video floppy disc.

In Fig. 1, reference numeral 1 generally designates such video floppy and reference numeral 2 designates a magnetic disc thereof. This magnetic disc 2 is 47mm in diameter, 40μm in thickness and is provided at its center with a center core 3 to which a spindle of a disc drive apparatus (not shown) is engaged. Also, the center core 3 is provided with a magnetic piece member 4 which is used to present a reference angular position of the magnetic disc 2 when it is rotated.

Reference numeral 5 designates a receptacle jacket of the magnetic disc 2. This jacket 5 is 60 x 54 x 3.6mm in size and rotatably contains therein the magnetic disc 2. The jacket 5 includes a central opening 5A to expose therethrough the center core 3 and the magnetic piece member 4 to the outside. The jacket 5 is further provided with another opening 5B through which a magnetic head (not shown) comes in contact with the magnetic disc 2 upon recording and/or reproducing. When the video floppy 1 is not in use, the opening 5B is closed by a slidable dust-proof shutter 6. Reference numeral 7 designates a nail member for avoiding the inadvertent or erroneous recording. This nail member 7 is removed away when the recording is inhibited.

Upon recording mode, 50 concentrical magnetic tracks can be formed on the magnetic disc 2 in which case, the outermost track is represented as the first track and the innermost track is represented as the 50th track. The width of each track is 60µm and the width of each guard band between the tracks is 40um, respectively.

. In taking a picture by the electronic still camera, the magnetic disc 2 is rotated at 3600 r.p.m. (field frequency) and a video signal of one field        is recorded on one track as a still picture. In this case, the color video signal to be recorded has a frequency distribution shown in Fig. 2.

Referring to Fig. 2, a luminance signal Sy is frequency-modulated to an FM signal Sf, wherein the sync. chip level of this FM signal Sf is 6MHz and the white peak level thereof is 7.5MHz. There is formed a line sequential color signal Sc which consists of a frequency-modulated signal Sr (central frequency thereof is 1.2MHz) by a color difference signal R-Y and a frequency-modulated signal Sb (central frequency thereof is 1.3MHz) by a color difference signal B-Y. A signal Sa resulting from adding the frequency-modulated color signal Sc and the frequency-modulated luminance signal Sf is recorded on the magnetic disc 2.

As described above, the video floppy 1 as shown in Fig. 1 has proper size and characteristics as a recording medium on which the color video signal is recorded.

Further, it is proposed that this video floppy 1 may be used as a recording medium for recording digital data.

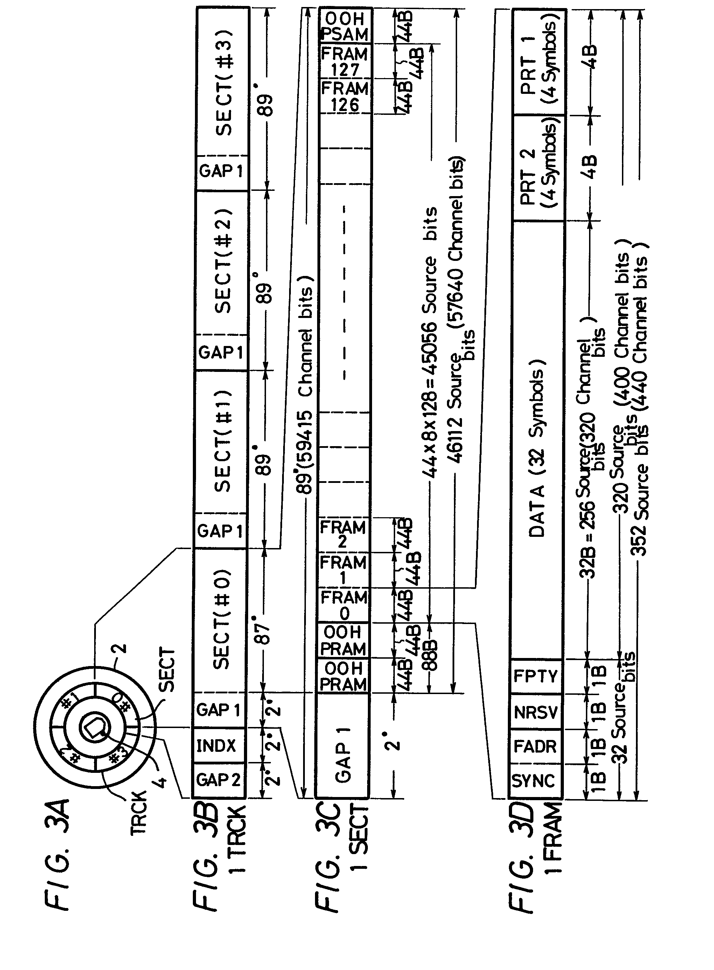

Figs. 3A to 3D respectively illustrate previously proposed physical formats used when digital data are recorded on and/or reproduced from the video floppy 1.

In Figs. 3A and 3B, reference letter TRCK designates one of arbitrary tracks formed on the magnetic disc 2 in the digital data recording format. This track TRCK comprises a gap area or interval GAP2 of 2°, an index area or interval INDX of 2° formed in the longitudinal direction of the track TRCK and four equally-divided intervals of 89° based on the position of the magnetic piece member 4 as a reference. Each of the four intervals is referred to as a sector SECT. The sector SECT immediately after the magnetic piece member 4 is referred to as zero-th sector (#0) and other succeeding sectors SECT are sequentially referred to as first (#1), second (#2) and third (#3) sectors, respectively. When the data are interchanged between the video floppy 1 and a host computer (not shown), the data are interchanged at the unit of one sector SECT. Further, the index interval INDX corresponds to about 3 of frame interval FRAM of data which will be described later. In this case, a signal "1000" indicative of Tmax (maximum length between transitions) of a digital signal is repeatedly recorded all over the index interval INDX.

As shown in Fig. 3C, the interval of 2° from the start end of each sector SECT is provided as a gap interval GAP1 that is used to prepare a margin portion used upon read and write operation. The remaining portion of the sector SECT is divided by equally 131 and in and/or from which data of 44

- 4 -

channel bytes (one channel byte is the unit of a signal formed by a predetermined conversion which will be mentioned later and corresponds to one byte of source data, while it corresponds to 10 bits in the eight-to-ten conversion) are recorded and/or reproduced. The first two intervals thus equally divided are provided as pre-amble sections PRAM. In the pre-amble sections PRAM, there is repeatedly provided a signal of "0101010101" which corresponds to, for example, 00H (H is a hexadecimal notation) of a source data and which is used for locking-in operation of a PLL (phase locked loop) circuit upon playback mode.

Further, 128-bit intervals succeeding to the pre-amble sections PRAM are referred to as frame intervals FRAM on and/or from which digital data are recorded and/or reproduced. The last one interval is used as a post-amble section PSAM which is equivalent to the pre-amble section PRAM.

Then, as shown in Fig. 3D, one frame FRAM sequentially comprises from its beginning a synchronizing signal SYNC ("0100010001" or "1100010001") of one channel byte, a frame address signal FADR, a non-defined signal NRSV, a check signal FPTY, data DATA of 32 bytes (one byte = one channel byte) and first and second redundant data PRT1 and PRT2 each of which is formed of 4 bytes, in this order. In this case, the check signal FPTY acts as parity data for the frame address signal FADR and the non-defined signal NRSV. While the data DATA are original data which are accessed by the host computer, this data DATA are interleaved within the digital data of one sector SECT. The redundant data PRT1 and PRT2 are parity data that are generated by coding digital data of one sector amount (32 bytes x 128 frames) by the minimum distance 5 according to the Reed Solomon coding method.

Accordingly, the capacities of digital data of one sector SECT, one track TRCK and one video floppy 1 become as follows.

One sector : 4096 bytes (= 16 bytes x 2 x 128 frames)

One track : 16K bytes (= 4096 bytes x 4 blocks)

One floppy : 800K bytes (= 16K bytes x 50 tracks)

When the digital data are accessed on the video floppy 1, the accessing is carried out at the unit of one sector SECT so that the accessing of digital data is made on the video floppy 1 at the unit of 4K bytes.

Further, the bit numbers of one frame FRAM and one sector SECT are as follows:

One frame : 352 source bits {= (4 + 32 + 4 + 4) bytes x 8} source bits

One sector (except gap interval GAP1) : 46112 source bits (= 352 bits x (128 + 3 frames))

In practice, when the digital data are recorded on and/or reproduced from the video floppy 1, a DSV (digital sum value) must be made small, Tmin/Tmax must be made small and Tw (window margin) must be made large so that all the digital signals as mentioned above are first subjected to the eight-to-ten conversion using Tmax = 4T and then recorded on the video floppy 1, while upon reproducing, they are subjected to the reverse conversion (ten-to-eight conversion) and then subjected to the original signal processing.

Accordingly, in the case of the afore-mentioned data density, the practical bit number on the video floppy 1 is multiplied by 10/8 and it amounts to

One frame : 440 channel bits

One sector (except gap interval GAP1) : 57640 channel bits

thus, the whole interval of one sector SECT is equivalent to

58965 channel bits ($\cong$ 57640 channel bits x 89°/87°)

(in practice, since the length of each interval is assigned from this channel bit number as described above, the total length of the frame interval FRAM is slightly shorter than 87°).

Accordingly, the bit rate used when digital data (signal converted according to the eight-to-ten conversion)

are accessed on the video floppy 1 becomes as

14.31M bits/second ($\cong$ 58965 bits x 4 blocks x field frequency x 360°/356°) and one bit is equivalent to 69.9n seconds ($\cong$ 1/14.31M bits).

In this case, it is acknowledged that a video signal and digital data are recorded on one video floppy 1 under being mixed state if they are recorded thereon at the track unit.

In this way, according to this format, the digital data of 800K bytes can be recorded on and/or reproduced from one side of the video floppy 1 of 2 inch-size. This capacity is more than twice the normal capacity of a prior art 5-inch size floppy disc. Therefore, this 2-inch size video floppy disc is large in capacity though it is small-sized one.

Further, since the revolution number of the magnetic disc 2 is the same as that used in the case of the video signal, the video signal and the digital data can be recorded and reproduced under being mixed state. In that case, the frequency spectra of both the signals recorded and/or reproduced from the magnetic disc 2 and the like become similar so that they can be recorded and reproduced under suitable conditions, such as an electromagnetic transducer characteristic, a head contact property with the tape and the like. Furthermore, when the two signals are recorded and/or reproduced under being mixed state, the revolution number of the magnetic disc 2 do not have to be switched so that it is not necessary to consider the time necessary for switching the servo circuit. Hence, two signals can be immediately used separately. In addition, since the revolution number is single and it is sufficient that the mechanism for the electromagnetic transducer system and the like has single characteristic on function, this is also advantageous from a money standpoint.

As described above, the video floppy 1 has novel effects as a medium for recording and reproducing a video signal or for storing  digital data or as a medium for recording and reproducing a video signal and  digital data under the state that they are mixed with each other.

In the above mentioned example, when the source data are derived from the video floppy 1, taking the position of the synchronizing signal SYNC as a reference, the channel data are divided into channel data of 10 bits each and the divided channel data are decoded to the original source data according to the ten-to-eight conversion. Accordingly, if the synchronizing signal SYNC is detected erroneously at the improper positions, the succeeding channel data are divided at the  wrong   positions, that is, a bit slip occurs so that until the correct synchronizing signal is detected next, an error occurs in the source data. In this case, if the distance of the synchronizing signal SYNC relative to the source data is large, the probability that such error will occur is small. If on the other hand the transmission band is compressed as mentioned above, such distance is as short as one bit so that the probability that such error will occur is large. If such error occurs frequently, the resulting errors can not be corrected by the first and second parity data PRT1 and PRT2 any more.

Further, in the afore-mentioned eight-to-ten conversion, 84H assumes "1010001001" and 80H assumes "1010010101" in, for example, the source data and it is assumed that they be successive. If the last bit "1" of 84H is mistaken as "0", a bit slip of "X100010001" occurs and this bit slip coincides with the synchronizing pattern so that a synchronizing error occurs.

Here, the probability Pse of the synchronizing error is presented as

$$Pse = Pbe* Prl4*Prl3$$

where Pbe is the bare bit error rate, Prl4 is the probability of 4-bit run length error in the eight-to-ten conversion and Prl3 is the probability of 3-bit run length error in the eight-to-ten conversion. By way of example, if $Pbe = 10^{-4}$, Prl4 = 0.062 and Prl3 = 0.213, the probability Pse becomes as follows:

$$Pse \doteqdot 1.3 \times 10^{-5}$$

Accordingly, if the error correction ability of the above mentioned respective redundant bits is a system in which $10^{-12}$ can be handled by $Pbe = 10^{-4}$, the Pse becomes considerably lower than the above value and hence this is disadvantageous.

In other words, if the probability that the synchronizing error will occur is considerably higher than the data error correction ability, the ability of the system is restricted by the higher probability so that the above mentioned error correction ability becomes over quality.

Accordingly, it is an object of this invention to provide an improved synchronizing system for digital data.

Another object of this invention is to provide a synchronizing signal detecting circuit for positively recovering digital data reproduced from a floppy disc.

Further object of this invention is to provide a digital synchronizing system in which a plurality of the same synchronizing patterns are successively formed on a recording format.

Still further object of this invention is to provide a digital data synchronizing system in which when a synchronizing signal is detected from a channel data, the same synchronizing pattern is successively formed on a pre-amble section of a recording format.

According to the digital data synchronizing system of the present invention, a synchronizing pattern is formed on a pre-amble section of a recording format and the synchronizing pattern is selected to be different from that of the digital data. This synchronizing pattern is formed a plurality of times (preferably twice) at every synchronizing timings, wherein only when the plurality of synchronizing patterns are all correct, a synchronizing detected signal is obtained and the counter corresponding to the run length is reset by this synchronizing detected signal and the above mentioned synchronization is established by the output of this counter.

These and other objects, features and advantages of the present invention will become apparent from the following detailed description of the preferred embodiment taken in conjunction with the accompanying drawings, throughout which like reference numerals designate like elements and parts.

Fig. 1 is a top view of an example of a previously proposed video floppy;

Fig. 2 is a waveform diagram showing a frequency distribution of a video signal recorded on and/or reproduced from a magnetic disc of the video floppy shown in Fig. 1;

Figs. 3A to 3D are diagrams respectively showing physical data formats recorded on the digital data track;

Figs. 4A to 4E are diagrams respectively showing novel physical data formats used in this invention; and

Fig. 5 is a circuit block diagram showing an embodiment of a synchronizing signal detecting circuit according to the present invention.

Now, an embodiment of a synchronizing signal detecting circuit according to the present invention will hereinafter be described in detail with reference to the attached drawings.

Firstly, a new format conforming to this invention will be described.

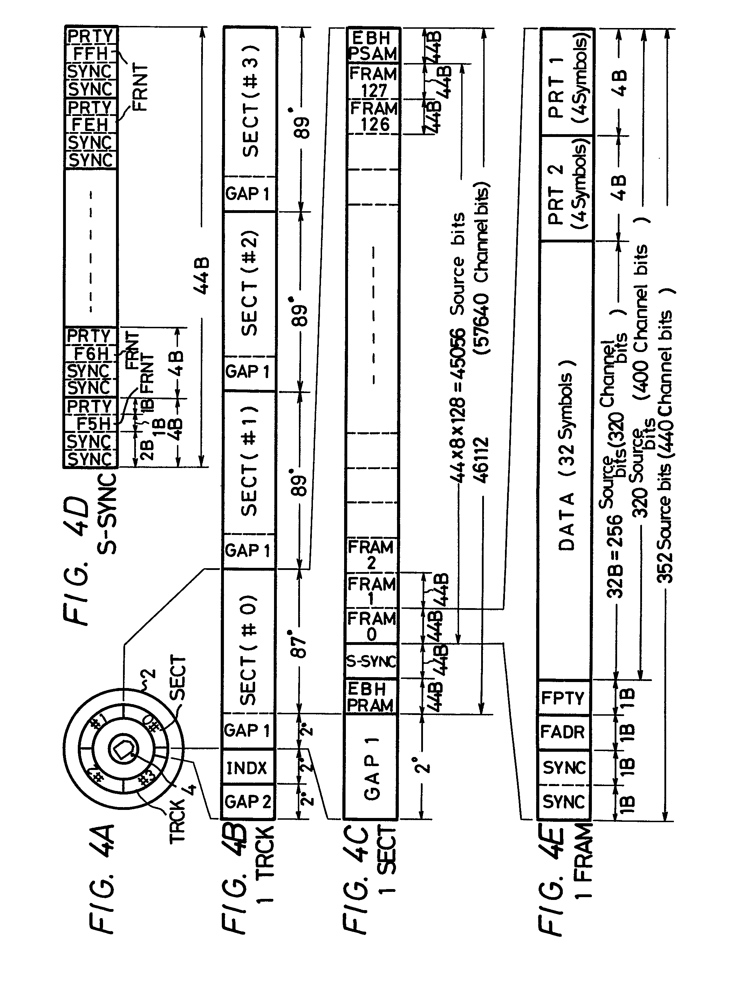

According to this new format, the format of the track TRCK is similar to that in the prior art as shown in Figs. 4A and 4B.

Then, as shown in Fig. 4C, in the sector SECT, an interval of 2° from the start end is assigned to the gap
interval GAP1 and the remaining interval is divided equally
by 131. Also, the first one interval of the divided
intervals is assigned to the pre-amble section PRAM. In this
pre-amble section PRAM, a signal of "1111111111"
corresponding to the EBH of, for example, the source data is
repeatedly formed and which is used for the lock-in operation
of the PLL circuit upon reproducing.

Further, an interval succeeding to this pre-amble
section PRAM is assigned as a sector synchronizing signal
interval S-SYNC.

As shown in Fig. 4D, the sector synchronizing signal
interval S-SYNC is divided by equally 11 and 4 channel bytes
are each recorded on and/reproduced from each of the divided
sector synchronizing intervals S-SYNC. A synchronizing
signal SYNC is formed repeatedly in the first two channel
bytes. Further, on the succeeding one channel byte, there is
provided a frame start position predicting signal FRNT which
is incremented one by one from F5H to FFH of the source data
and in the last one channel byte a parity signal PRTY thereof
is provided.

Then, 128 frames FRAM are provided in the interval
succeeding to this sector synchronizing interval S-SYNC.
Furthermore, the last one interval thereof is used as a
post-amble section PSAM in which a signal of "1111111111"
corresponding to the EBH of the source data is repeatedly
provided similarly to the pre-amble sectionl PRAM.

As shown in Fig. 4E, one frame FRAM sequentially
comprises from its start the repetition of the synchronizing
signals SYNC of 2 channel bytes, the frame address signal FADR of one channel byte, the check signal FPTY of one channel byte, data DATA of 32 bytes and first and second redundant data PRT1 and PRT2 of 4 bytes each. In this case, the frame address signal FADR is one channel byte and one byte on the source data. Since as described above the number of the frames FRAM within one sector SECT is 128, it is sufficient that the frame address is formed of 7 bits, while other remaining bits, for example, the MSB (most significant bit) is used to record other informations. Further, the check signal FPTY is the parity data used for the frame address signal FADR, while the data DATA and the first and second redundant data PRT1 and PRT2 are similar to those in the prior art.

Accordingly, in this new format, the signal can be recorded and reproduced with the storage capacity exactly the same as that of the above-mentioned prior art format.

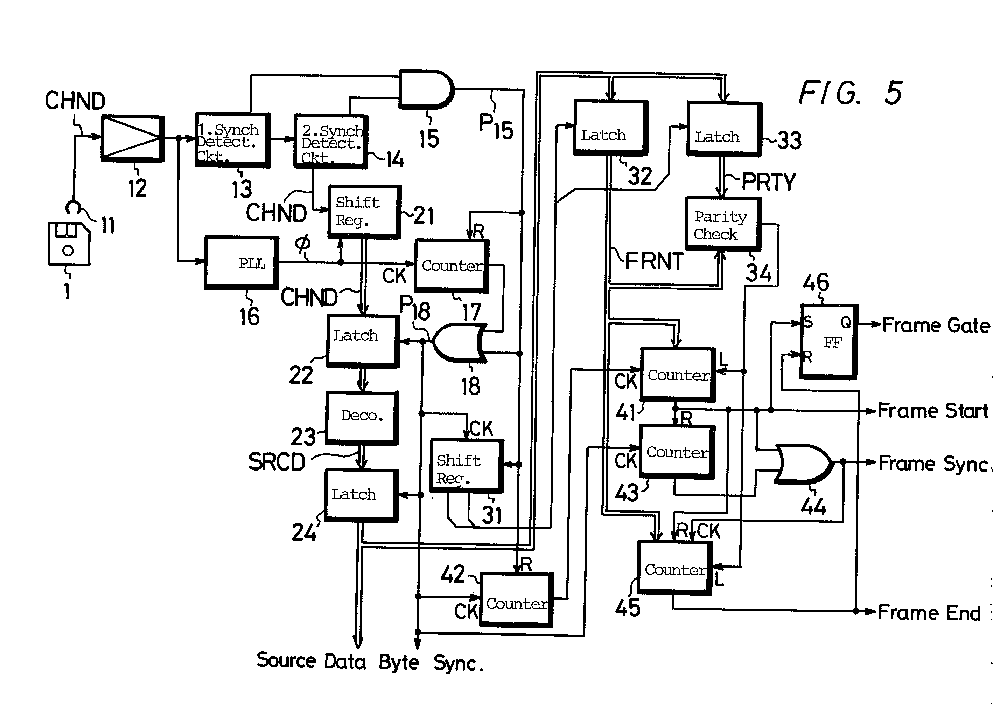

Subsequently, the circuit arrangement of one embodiment of the synchronizing signal detecting circuit according to the present invention will be described with reference to Fig. 5.

Referring to Fig. 5, reference numeral 1 designates a video floppy 1. The magnetic disc 2 (refer to Fig. 1) of the video floppy 1 is rotated by a motor (not shown) at the revolution speed of 60 times per second and a magnetic head 11 is made in contact with a target track TRCX on the magnetic disc 2 so that channel data CHND of the target track TRCX are reproduced from the magnetic disc 2. This data CHND are supplied through a playback amplifier 12 to a first synchronizing pattern detecting circuit 13.

This detecting circuit 13 is formed of a shift register which has a 10-bit serial-input and serial and/or parallel-output and a coincidence detecting circuit which compares the parallel output from this shift register with a pattern of a normal synchronizing signal SYNC and which generates an output of "1" when both of them coincide with each other.  Accordingly, when the synchronizing signal SYNC is reproduced correctly, the output of this detecting circuit 13 becomes "1".

The detected output from the detecting circuit 13 is supplied to an AND circuit 15 and also the serial output from the shift register of the detecting circuit 13 is supplied to a second synchronizing pattern detecting circuit 14 and the resulting detected output is supplied to the AND circuit 15. Accordingly, when the two synchronizing signals SYNC are correctly reproduced successively  an output P15 of the AND circuit 15 becomes "1".

Further, the data CHMD from the amplifier 12 are supplied to a PLL (phase locked loop) circuit 16 which generates a channel clock $\phi$ that is bit-synchronized with the data CHMD. This channel clock $\phi$ is supplied to a 10-bit counter 17 as a count input and the AND output P15 from the AND circuit 15 is supplied to the counter 17 as a reset input.  Then, the carry output of the counter 17 and the AND output P15 are delivered through an OR circuit 18.

Accordingly, the carry output is generated from the counter 17 at every 10 bits of the channel clock $\phi$ and at that time, the counter 17 is reset by the AND output P15 each time when the two synchronizing signals SYNC are correctly reproduced successively and the counter 17 is started to count from the reset time point so that the OR circuit 18 generates its OR output P18 at every 10 bits of the channel clock $\phi$ counted from the synchronizing signal SYNC. In other words, this OR output P18 is the synchronizing signal indicative of the divided point of the channel data CHND at every 10 bits. In this case, the 10 bits of the channel data CHND correspond to 8 bits of the source data, so that the OR output P18 is the signal indicative of the divided point of this source data. Thus, this OR output P18 will hereinafter be referred to as a byte synchronizing signal.

The channel data CHND are serially derived from a predetermined stage of the shift register in the detecting circuit 14. This data CHND is supplied to a 10-bit serial-input and parallel-output shift register 21 and the clock $\phi$ is supplied to the shift register 21 so that 10 bits each of the data CHND are parallelly generated from the shift register 21. Then, this data CHND are supplied to a latch circuit 22 and the byte synchronizing signal P18 is supplied to the latch circuit 22 as the latch enable input. Thus, when the data CHND are correctly divided into 10 bits each, the data CHND are latched in the latch circuit 22 and the data CHND latched are supplied to a decoder 23 in which they are decoded (ten-to-eight conversion) to source data SRCD of 8 bits. Then, this source data SRCD are once latched in a latch circuit 24 by the byte synchronizing signal P18 and then derived therefrom as a read output.

Further, the pulse P15 is supplied to a 4-bit serial-input and parallel-output shift register 31 and the synchronizing signal P18 is supplied to the shift register 31 as a clock so that outputs are respectively generated from the first and second bits or stages of the shift register 31 at time points of signals FRNT and PRTY. These outputs are supplied to 8-bit latch circuits 32 and 33 as latch enable inputs and the source data SRCD from the latch circuit 24 are supplied to the latch circuits 32 and 33 so that the signals FRNT and PRTY (and signals generated at the time points of these signals) are latched in the latch circuits 32 and 33, respectively. These latched signals FRNT and PRTY are supplied to a parity check circuit 34 in which the signal FRNT is checked by the parity signal PRTY. When the signal FRNT is correct, the checked output from the parity check circuit 34 is supplied to an 8-bit counter 41 as its load of the preset input. Further, the signal FRNT from the latch circuit 32 is supplied to the counter 41 as a preset input.

While, the signal S18 is supplied to a quaternary counter 42 as a count input and the signal P15 is supplied to the counter 42 as a reset input so that from the counter 42, a carry output is generated at every 4 cycles of the signal P18, that is, a signal having a cycle of the signal FRNT. This signal is supplied to the counter 41 as the count input.

Accordingly, when any of the signals FRNT is correct, the counter 41 is preset to the value (any of the F5H to FFH) at that time. Thereafter, the counter 41 is incremented at every 4 cycles of the byte synchronizing signal P18 and thus, at the first frame FRAM succeeding to the signal S-SYNC, the carry output is generated from the counter 41. In other words, this carry output is the frame start signal which indicates the first frame FRAM in a certain sector SECT.

Then, this signal is supplied to a 44-scale counter 43 as a reset input and also the signal P18 is supplied to the counter 43 as a count input so that the carry output is generated from the counter 43 at every frames FRAM. Then, this carry output and the carry output from the counter 41 are delivered through an OR circuit 44. Accordingly, this OR output is generated in each sector SECT at every frames FRAM and becomes the frame synchronizing signal which indicates the frame FRAM.

Further, there is provided a 128-scale counter 45. To this counter 45, there are supplied the signal FRNT from the latch circuit 32 as a preset input, the output of the check circuit 34 as a load for its preset input, the frame synchronizing signal from the OR circuit 44 as a count input and the frame start signal from the counter 41 as the reset input. Accordingly, the counted value of the counter 45 is made "0" by the signal FRNT or the frame start signal at the first frame FRAM of each sector SECT and thereafter, it is incremented by "1" each at every frames FRAM by the frame synchronizing signal so that the carry output of the counter 45 is generated when 128 frames FRAM in each sector SECT are ended, that is, this carry output is the frame end signal.

While, the frame start signal and the frame end signal are supplied to an RS-flip-flop circuit 46 which generates a frame gate signal indicative of the period of 128 frames FRAM in each sector SECT.

In this way, according to the present invention, the source data SRCD is read out. In this case, particularly in accordance with this invention, when the frame start position announcing signal FRNT is generated at the pre-amble section PRAM at the beginning of each sector SECT, the frame synchronizing signal is generated on the basis of this signal FRNT so that even if the first synchronizing signal SYNC of the frame FRAM is not generated, it is possible to correctly derive this synchronizing signal from the first frame FRAM.

In addition, since 11 frame start position predicting signals FRNT are successively provided at the beginning of the sector SECT, even if an error exists in a part of the frame start position predicting signals FRNT, it is possible to correctly derive the frame synchronizing signal.  Even if all the frame start position predicting signals FRNT can not be obtained, it is possible to correctly obtain the frame synchronizing signal by the first synchronizing signal SYNC of the frame FRAM.

Further, when the synchronizing signal SYNC is generated at the first pre-amble section PRAM of the sector SECT, the byte synchronizing signal P18 is generated in synchronism with this synchronizing signal SYNC at every 10 bits of the channel data CHND, so that even if the first synchronizing signal SYNC of the frame FRAM is not generated, it is possible to prevent the error from being generated in the byte synchronizing signal P18.  Furthermore, since the two synchronizing signals SYNC are repeatedly provided 11 times successively at the beginning of the sector SECT, even if an error occurs in a part of the synchronizing signals SYNC, the byte synchronizing signal P18 can be generated.  In this case, even if an error occurs in all of the 11 synchronizing signals SYNC, it is possible to obtain the byte synchronizing signal P18 from the first synchronizing signal SYNC of the frame FRAM.  In addition, since the synchronizing signal SYNC in the pre-amble section PRAM is utilized, it is possible to carry out the original data processing rapidly from the start position of the effective data.

While in the above mentioned example the source data SRCD is subjected to the eight-to-ten conversion and then recorded on the video floppy 1, if the run length of a data is limited, that data is subjected to an m-n conversion (m < n) and a bit synchronizing signal and an n-bit synchronizing signal are sequentially provided in the first pre-amble section of a packet of that data, this invention can be applied to such case similarly.

Further, when instead of the case that the frame start position predicting signal FRNT is incremented from F5H to FFH, it is decremented from 0AH to 00H, it is sufficient that the counter 41 carries out the down counting to thereby generate a borrow output. Alternatively, it may be possible that a specific counted value is detected and used as the frame start signal.

The above description is given on a single preferred embodiment of the invention but it will be apparent that many modifications and variations could be effected by one skilled in the art without departing from the spirits or scope of the novel concepts of the invention so that the scope of the invention should be determined by the appended claims only.

CLAIMS

1. Synchronizing signal detecting circuit for a digital data reproducing apparatus comprising:

a) reproducing means (12) connected to a magnetic head (11) for deriving digital signals;

b) phase locked loop means (16) connected to said reproducing means (12) for generating clock signals based on said derived digital signals;

c) sync. (synchronizing) counter means (17) for generating sync. timings by counting said clock signals;

d) a plurality of sync. pattern detecting means (13,14) connected to said reproducing means for detecting sync. patterns included in said digital signals; and

e) logic circuit means (15) connected to said plurality of sync. pattern detecting means for supplying an initialize pulse to said sync. counter means upon detecting successive sync. patterns in said digital signals at said plurality of sync. pattern detecting means.

2. Synchronizing signal detecting circuit as cited in claim 1, wherein said plurality of sync. pattern detecting means includes at least a series-connected first pattern detector (13) and a second pattern detector (14), and respective pattern coincidence outputs are supplied to said logic circuit means (15).

3. Synchronizing signal detecting circuit as cited in claim 2, wherein said logic circuit means includes an AND gate (15), and an output of said AND gate is connected to a reset terminal (R) of said sync. counter means.

4. Synchronizing signal detecting circuit as cited in claim 1, wherein said digital signals include an n-bit channel data converted from an m-bit source data, where $n$ and $m$ are integers and n is larger than m.

5. Synchronizing signal detecting circuit as cited in claim 1, wherein said digital signals are basically formed of a plurality of sectors, and each sector includes a pre-amble section, a plurality of frames and a post-amble section.

6. Synchronizing signal detecting circuit as cited in claim 5, wherein said successive sync. patterns included in said digital signals are positioned at said pre-amble section included in said each sector.

7. Synchronizing signal detecting circuit as cited in claim 4, wherein said digital signals derived from said reproducing means are converted from said n-bit channel data to said m-bit source data based on said sync. timings derived from said sync. counter means.

8. Synchronizing signal detecting circuit as cited in claim 7, wherein said m-bit source data includes a sector sync. interval having a plurality of sector sync. sections, each of which includes number data changing successively.

9. Synchronizing signal detecting circuit as cited in claim 1, further comprising number data counter means which is (41-45) loaded with said number data of the sector sync. sections when the number data are correct.

10. Synchronizing signal detecting circuit as cited in claim 9, wherein said number data counter is supplied with a clock signal derived from said sync. timings, and supplies a frame start signal.

FIG. 1

FIG. 2

FIG. 3A

2  SECT  TRCK  4  #0 #1 #2 #3

FIG. 3B
1 TRCK

GAP 2 | INDX | GAP 1 | SECT(#0) | GAP 1 | SECT(#1) | GAP 1 | SECT(#2) | GAP 1 | SECT(#3)

2°  2°  2°  87°  89°  89°  89°

89°(59415 Channel bits)

FIG. 3C
1 SECT

GAP 1 | OOH PRAM | OOH PRAM | FRAM 0 | FRAM 1 | FRAM 2 | --- | FRAM 126 | FRAM 127 | OOH PSAM

2°  44B  44B  44B  44B  44B  44B  44B  44B

88B

44×8×128=45056 Source bits

46112 Source bits (57640 Channel bits)

FIG. 3D
1 FRAM

SYNC | FADR | NRSV | FPTY | DATA (32 Symbols) | PRT 2 (4 Symbols) | PRT 1 (4 Symbols)

1B  1B  1B  1B  32B = 256 Source bits  4B  4B

32 Source bits

320 Channel bits

320 Source bits (400 Channel bits)

352 Source bits (440 Channel bits)

FIG. 4A

FIG. 4D
S-SYNC

SYNC | SYNC | F5H | PRTY | SYNC | F6H | PRTY | - - - - - | SYNC | SYNC | FEH | PRTY | SYNC | FFH | PRTY

2B | 1B | 1B FRNT
1B | FRNT
4B | 4B
FRNT
44B

TRCK | SECT
4 | 2

FIG. 4B
1 TRCK

GAP 2 | INDX | GAP 1 | SECT ( # 0) | GAP 1 | SECT ( #1) | GAP 1 | SECT (#2) | GAP 1 | SECT (#3)

2° | 2° | 2° | 87° | 89° | 89° | 89°

FIG. 4C
1 SECT

GAP 1 | EBH PRAM | S-SYNC | FRAM 0 | FRAM 1 | FRAM 2 | - - - - - | FRAM 126 | FRAM 127 | FRAM 127 | EBH PSAM

2° | 44B | 44B | 44B | 44B | 44B | 44B | 44B

44×8×128 =45056 Source bits
46112          (57640 Channel bits)

FIG. 4E
1 FRAM

SYNC | SYNC | FADR | FPTY | DATA ( 32 Symbols ) | PRT 2 (4Symbols) | PRT 1 (4Symbols)

1B | 1B | 1B | 1B

32B =256 Source bits (320 Channel bits ) | 4B | 4B
320 Source bits (400 Channel bits )
352 Source bits (440 Channel bits )

0 203 592

24

0 203 592

F/G. 5